# FASCICULE DE BREVET EUROPEEN

(11) **EP 2 324 207 B1**
(45) Date de publication et mention de la délivrance du brevet: **11.12.2013**
(21) Numéro de dépôt: 09782164.9
(22) Date de dépôt: 25.08.2009
(51) Int. Cl.: F01D 9/04

(54) **AUBAGE FIXE DE TURBOMACHINE A MASSE REDUITE ET TURBOMACHINE COMPORTANT AU MOINS UN TEL AUBAGE FIXE**
FESTSTEHENDE SCHAUFELANORDNUNG FÜR EINE TURBOMASCHINE MIT REDUZIERTEM GEWICHT, UND TURBOMASCHINE MIT MINDESTENS EINER SOLCHEN FESTSTEHENDEN SCHAUFELANORDNUNG
FIXED VANE ASSEMBLY FOR A TURBINE ENGINE WITH A REDUCED WEIGHT, AND A TURBINE ENGINE INCLUDING AT LEAST ONE SUCH FIXED VANE ASSEMBLY

(30) Priorité: 26.08.2008 FR 0855731
(43) Date de publication de la demande: 25.05.2011
(73) Titulaire: Snecma, 75015 Paris (FR)
(72) Inventeur: BLANCHARD, Stéphane, Pierre, Guillaume, F-77590 Chartrettes (FR); GARIN, Fabrice, Marcel, Noël, F-77350 Boissise la Bertrand (FR); RICOU, Laurent, Pierre, Joseph, F-77000 Melun (FR); DAKOWSKI, Mathieu, F-94880 Noiseau (FR)
(74) Mandataire: Ilgart, Jean-Christophe
(86) Numéro de dépôt international: PCT/EP2009/060932
(87) Numéro de publication internationale: WO 2010/023205

(56) Documents cités:
- EP-A- 0 363 280
- EP-A- 0 513 956
- FR-A- 2 136 773
- FR-A- 2 846 997
- FR-A- 2 907 499
- GB-A- 745 073
- GB-A- 2 424 248
- US-A1- 2004 219 014

## Description

### DOMAINE TECHNIQUE ET ART ANTÉRIEUR

La présente invention se rapporte à un aubage fixe de turbomachine, distributeur d'une turbine haute pression ou basse pression, notamment pour un turboréacteur d'avion, et à une turbomachine comportant au moins un tel aubage fixe.

Un turboréacteur d'avion comporte classiquement un compresseur haute pression, un compresseur basse pression, une chambre de combustion, une turbine haute pression et une turbine basse pression.

Le compresseur est destiné à augmenter la pression de l'air atmosphérique, la chambre de combustion mélange l'air qui est comprimé par le compresseur avec du carburant et brûle ce mélange, et la turbine, placée dans le flux éjecté, est entraînée par ce flux de gaz à haute température. La turbine sert notamment à entraîner les compresseurs.

Les compresseurs comportent des aubes mobiles et des redresseurs fixes pour redresser le flux entre les étages de compression.

En sortie de la chambre de combustion, un distributeur haute pression fixe est prévu, destiné à redresser le flux de gaz chaud sortant de la chambre de combustion avant qu'il n'entre en contact avec la turbine haute pression. Ce distributeur haute pression comporte un anneau fixé sur un carter, dit carter sous chambre, et des pales s'étendant radialement vers l'extérieur. Le carter sous chambre assure la liaison entre le compresseur et la turbine.

Le distributeur est composé de plusieurs secteurs, fixés chacun sur le carter sous chambre.

Chaque secteur comporte, de manière classique, une plateforme de laquelle s'étendent radialement vers l'extérieur des pales et radialement vers l'intérieur une patte de fixation au carter. La patte comporte deux alésages destinés à être alignés avec deux alésages du carter sous chambre prévus du côté de la turbine haute pression, des pions sont insérés dans ces alésages alignés, un flasque est rajouté en aval des pions pour les retenir axialement.

Ce type de turboréacteur est par exemple connu du document FR 2 907 499.

Ce type de fixation donne satisfaction, cependant la masse de l'ensemble est importante, l'immobilisation axiale des pions étant obtenue par le flasque annulaire supplémentaire.

C'est par conséquent un but de la présente invention de proposer un aubage fixe de turbomachine dont la masse est réduite.

Un aubage fixe de turbomachine selon l'art antérieur est également divulgué dans le document EP 0513956.

### EXPOSÉ DE L'INVENTION

Le but précédemment énoncé est atteint par un aubage fixe de turbomachine selon la revendication 1 comportant au moins deux secteurs angulaires forment un distributeur de turbine munis de pales et d'une plateforme, les pales s'étendant radialement vers l'extérieur à partir de la plateforme et un carter sous chambre sur lequel sont fixés les secteurs angulaires, la retenue radiale des secteurs angulaires étant obtenue au moyen de pions traversant une patte en saillie de la plateforme radialement vers l'intérieur, et un jonc monté dans une gorge du carter et formant un butée axiale pour ces pions de sorte à les maintenir dans une position de retenue radiale des secteurs angulaires.

En d'autres termes, le flasque de l'état de la technique est remplacé par un simple jonc élastique dont la masse est faible par rapport à celle du flasque. En outre sa mise en place et le maintien en position sont très simples. Le retrait du jonc est simple également en cas de maintenance sur un secteur angulaire.

Les pions de fixation du distributeur sur le carter sous chambre sont montés du côté de la chambre de combustion, ainsi qu'un jonc d'arrêt axial de ces pions. On utilise alors la place disponible et jusqu'à présent inutilisée du côté de la chambre de combustion, pour réaliser le montage, ce qui permet de disposer au plus prés la turbine haute pression du distributeur.

La présente invention a alors principalement pour objet un aubage fixe de turbomachine d'axe longitudinal comportant un carter sous chambre et au moins deux secteurs angulaires munis de pales forment un distributeur de turbine, lesdits secteurs angulaires étant fixés sur le carter, chaque secteur angulaire comportant une plateforme de laquelle au moins une pale est en saillie radialement vers l'extérieur et une patte de fixation du secteur angulaire sur le carter, ladite patte de fixation étant en saillie de la plateforme radialement vers l'intérieur, le carter comportant une première gorge annulaire d'axe longitudinal recevant les pattes de fixation, l'aubage fixe comportant des pions de retenue radiale des secteurs angulaires introduits dans des alésages réalisés dans le carter et les pattes de fixation, lesdits alésages ayant des axes parallèle à l'axe longitudinal, le carter comportant également une deuxième gorge annulaire d'axe longitudinal recevant un jonc d'arrêt axial des pions de retenue radiale, ledit jonc d'arrêt axial étant disposé du côté d'une chambre de combustion par rapport à la première gorge.

Chaque pion peut comporter une première collerette radiale délimitant axialement une tête et une queue, la queue traversant les alésages du carter et de la patte de fixation, ladite première collerette étant en appui par une face contre une nervure annulaire séparant la première et la deuxième gorge, et par une autre face contre le jonc, le jonc étant en appui par un bord radialement extérieur contre une portion de la périphérie de la tête de chaque pion orientée radialement vers l'intérieur.

De manière avantageuse, les pions comportent une deuxième collerette radiale à une extrémité libre de la tête, ladite deuxième collerette définissant avec la première collerette un espace de largeur sensiblement égale à celle de la deuxième gorge annulaire, et recevant une portion du bord radialement extérieur du jonc.

Les première et deuxième collerettes des pions peuvent comporter chacun un méplat, et des moyens d'immobilisation angulaire des pions. Les moyens d'immobilisation angulaire sont, par exemple formés par un logement muni d'un méplat de forme correspondante à celle de la première collerette bordant l'alésage de la nervure annulaire de séparation de sorte que les méplats des collerettes soient orientés radialement vers l'extérieur.

Le jonc peut être fendu, et comporte avantageusement deux extrémités se recouvrant de sorte à ce que le jonc forme une boucle fermée.

Par exemple, les extrémités du jonc sont de plus faible épaisseur et sont reliées par une partie de plus grande épaisseur, les extrémités se chevauchant, chacune des extrémités étant munie d'au moins un perçage pour l'insertion d'un outil pour rapprocher ou écarter les extrémités.

Dans une variante de réalisation, la face de la première gorge opposée à la nervure de séparation comporte des alésages non débouchants recevant chacun l'extrémité libre de la queue d'un pion.

Dans une autre variante de réalisation, la face de la première gorge opposée à la nervure de séparation comporte dés alésages débouchants recevant chacun l'extrémité libre de la queue d'un pion.

Dans une autre variante de réalisation, les extrémités libres des queues des pions sont en appui contre la face de la première gorge opposée à la nervure de séparation.

Les pattes de fixation des secteurs angulaires peuvent comporter chacune deux alésages disposés sur un arc de cercle centré sur l'axe longitudinal, l'un ayant une section circulaire et l'autre une section oblongue dont la plus grande dimension est sensiblement alignée avec l'arc de cercle.

La présente invention a également pour objet une turbomachine comportant au moins un aubage fixe selon la présente invention.

### BRÈVE DESCRIPTION DES DESSINS

La présente invention sera mieux comprise à l'aide de la description qui va suivre et dessins sur lesquels :
- la figure 1A est une vue en coupe longitudinale d'une partie d'un turboréacteur selon la présente invention au niveau de la chambre de combustion et de la turbine haute pression,
- la figure 1B est une vue de face d'un secteur angulaire d'un distributeur d'un turboréacteur de la figure 1A,
- la figure 2 est une vue agrandie de la figure 1 au niveau de la fixation du distributeur haute pression sur le carter sous chambre,
- les figures 3A à 3C sont des vues de détail de la figure 2 selon trois variantes de réalisation,
- la figure 4 est une vue en perspective d'un jonc formant butée axial pour les pions de retenue radiale,
- la figure 5 est une vue en coupe agrandie d'un autre exemple de réalisation de la fixation d'un secteur angulaire sur un carter sous chambre,
- la figure 6 est une vue en coupe longitudinale d'une variante de la figure 5,
- la figure 7 est une vue de face côté chambre de combustion de la liaison entre le carter et les secteurs angulaires selon la variante de la figure 6.

### EXPOSÉ DÉTAILLÉ DE MODES DE RÉALISATION PARTICULIERS

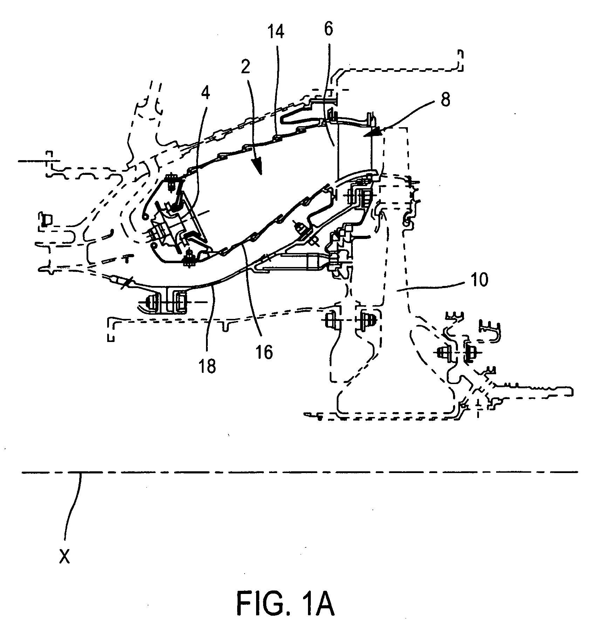

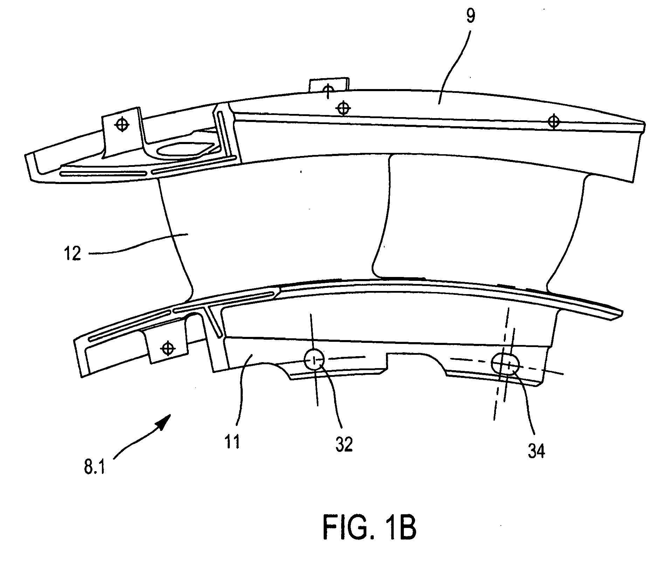

Nous considérerons pour la description le sens de la gauche vers la droite sur la figure 1 qui correspond au sens d'écoulement du flux de gaz, la gauche étant désignée par amont et la droite étant désignée par aval.

A des fins de simplicité, nous utiliserons les mêmes références pour désigner les éléments ayant la même fonction et sensiblement la même structure dans les différents exemples de réalisation qui seront décrits.

Sur la figure 1A, on peut voir une vue de détail d'un turboréacteur selon la présente invention d'axe de révolution X. Ce turboréacteur comporte notamment une chambre de combustion 2, munie en amont d'un orifice d'admission 4 d'air provenant du compresseur (non représenté), et d'un orifice d'échappement 6 des gaz de combustion. Le turboréacteur comporte également un distributeur haute pression 8 disposé en amont de l'orifice d'échappement 6, une turbine haute pression 10 en aval du distributeur 8, la turbine 10 entraînant le compresseur.

La chambre de combustion 2 est composée d'une enveloppe radialement extérieure 14 fixée sur un carter extérieur et d'une enveloppe radialement intérieure 16 fixée sur un carter intérieur 18, désigné « carter sous chambre ».

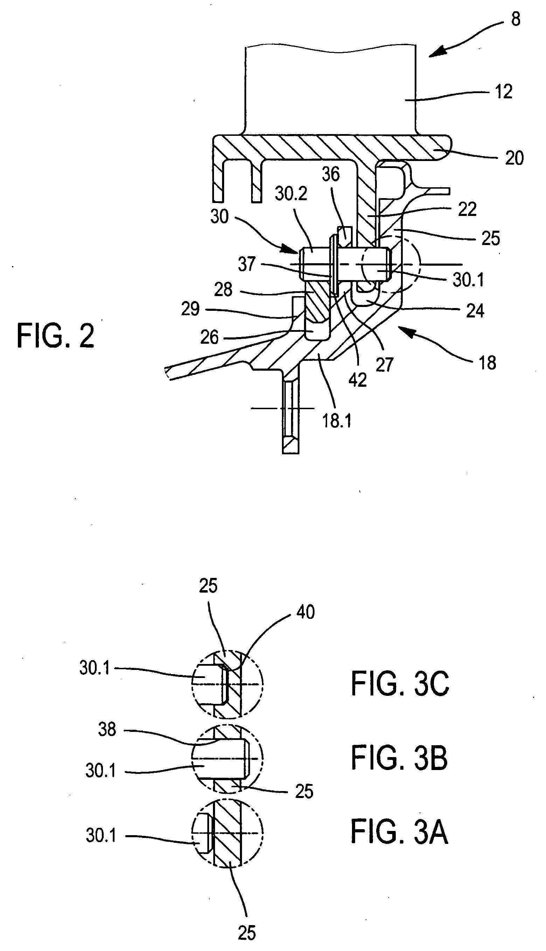

Le distributeur 8 est fixé sur le carter sous chambre 18. Comme on peut le voir en détail sur la figure 2, le distributeur 8 comporte des pales 12 s'étendant entre un anneau radialement extérieur 9 et un anneau radialement intérieur 11. Les pales 12 sont disposées en aval de l'orifice d'échappement 6 sur le chemin d'écoulement des gaz de combustion, ces pales 12 sont destinées à redresser le flux de gaz sortant de la chambre de combustion 2 avant son interaction avec la turbine haute pression 10.

Le distributeur 8 est composé d'au moins deux secteurs angulaires 8.1 fixés séparément sur le carter sous chambre 18. A titre d'exemple, le distributeur 8 comporte 16 secteurs angulaires 8.1 munis chacun de deux pales.

Les pales 12 s'étendent radialement vers l'extérieur à partir d'une plateforme 20, formant une portion de la couronne intérieure 11 du distributeur 8. Une patte de fixation 22 de la plateforme 20 sur le carter sous chambre 18 est en saillie radialement vers l'intérieur de la plateforme 20 sur la face opposée de la plateforme 20 portant les pales 12.

Lorsque tous les secteurs angulaires 8.1 sont fixés sur le carter sous chambre, les plateformes mises bout à bout forme un anneau continu.

Sur la figure 2, on peut voir le carter sous chambre 18 comportant, à son extrémité aval 18.1 une première gorge annulaire 24 d'axe X, ouverte radialement vers l'extérieur et une deuxième gorge annulaire 26 d'axe X, ouverte radialement vers l'extérieur. La première gorge 24 est disposée entre la deuxième gorge 26 et la turbine haute pression 10. La première gorge 24 est délimitée par une première nervure annulaire 25 et une deuxième nervure annulaire 27 ; la deuxième gorge annulaire 26 est délimitée par la deuxième nervure annulaire 27 et une troisième nervure annulaire 29, la deuxième nervure annulaire 27 séparant les première 24 et deuxième 26 gorges.

La première gorge 24 reçoit la patte de fixation 22 des secteurs angulaires du distributeur haute pression 8.

Selon la présente invention, des pions 30 de retenue radiale des secteurs angulaires 8.1 sont introduits dans des alésages des pattes de fixation 22 et du carter sous chambre 18, les pions 30 solidarisant les secteurs angulaires sur le carter sous chambre 18. Un jonc 28 est prévu dans la deuxième gorge 26 formant une butée axiale des pions de retenue radiale 30.

Les pions de retenue radiale 30 sont montés dans le carter sous chambre 18 et dans les pattes de fixation 22 du côté de la chambre de combustion 2, ainsi que le jonc d'arrêt 28. La distance entre le distributeur 8 et la turbine 10 peut alors être réduite au maximum en respectant un jeu pour éviter une interférence mécanique entre la turbine 10 et le distributeur 8.

Comme on peut le voir sur la figure 1B, chaque patte de fixation 22 comporte deux alésages traversants 32, 34 disposés sur une portion d'arc de cercle centré sur l'axe X. L'un des alésages 32 a une section circulaire de diamètre sensiblement égal à celui des pions de retenue radiale 30 pour permettre leur mise en place dans l'alésage 32, et l'autre 34 a une section oblongue dont la plus grande dimension est orientée le long de l'arc de cercle centré sur l'axe X, le plus petit diamètre étant sensiblement égal au diamètre des pions de retenue radiale 30. La mise en oeuvre d'un alésage circulaire et d'un alésage oblong permet un montage même en cas de variation dans les dimensions.

La deuxième nervure annulaire 27 comporte également des paires d'alésages 36, autant de paires d'alésages 36 que de secteurs angulaires de distributeur à fixer sur le carter sous chambre 18.

La position radiale et l'écartement relatif de chaque paire d'alésages 36 sont tels que les alésages 36 sont alignés avec les alésages 32, 34 d'un secteur angulaire 8.1, quand celui-ci est en place. Dans l'exemple représenté, la plateforme 20 vient en appui sur l'extrémité radialement extérieure de la première nervure annulaire 25.

Les alésages 32, 34, 36 ont un axe sensiblement parallèle à l'axe longitudinal X.

De manière avantageuse, l'extrémité amont des alésages 36 est chanfreinée pour faciliter la mise en place des pions 30.

Chaque pion de retenue radiale 30 traverse un alésage 36 de la deuxième nervure annulaire 27 et un alésage 32 ou 34 de la patte de fixation 22.

Chaque pion de retenue radiale 30 comporte au moins une butée axiale formée, dans l'exemple représenté, par une collerette 37 en saillie radialement et venant en appui contre une face amont de la deuxième nervure annulaire 27.

Cette collerette 37 délimite axialement dans le pion de retenue radiale 30 une queue 30.1 traversant les alésages 36 et 32 ou 34, et une tête 30.2 disposée du côté de la chambre de combustion 2.

Sur les figures 3A à 3C, on peut voir différentes formes pour la première nervure 25.

Sur la figure 3A, la première nervure 25 comporte une face amont plane, l'extrémité libre de la queue 30.1 du pion 30 est en appui contre cette face. Cette réalisation est très simple et ne dégrade pas l'étanchéité entre les deux zones de part et d'autre du carter sous chambre 18, qui sont à des pressions différentes.

Sur la figure 3B, la première nervure 25 comporte une pluralité de paires d'alésages débouchant 38 recevant l'extrémité libre de la queue 30.1 de chaque pion 30, le nombre de paires d'alésages 38 étant égal au nombre de secteurs angulaires de distributeur à fixer. Cette réalisation est de fabrication simple et assure une bonne rigidité de la liaison entre le secteur angulaire et le carter sous chambre.

Sur la figure 3C, on peut voir une autre variante de réalisation, dans laquelle la première nervure 25 comporte une pluralité de paires d'alésages non débouchants 40 recevant l'extrémité libre des queues 30.1 des pions de retenue radiale 30, le nombre de paires d'alésages 40 étant égal au nombre de secteurs angulaires de distributeur à fixer. L'extrémité libre de chaque queue 30.1 vient donc en butée contre le fond d'un alésage 40.

Cette variante de réalisation permet à la fois de ne pas dégrader l'étanchéité et d'assurer une bonne rigidité de la liaison entre le secteur angulaire et le carter sous chambre.

Dans l'exemple représenté, la face amont de la deuxième nervure 27 comporte un décrochement 42 pour recevoir la collerette 37, de sorte que la collerette ne soit pas en saillie de la face amont de la deuxième nervure 27, évitant de gêner la mise en place du jonc d'arrêt axial 28.

Le jonc d'arrêt axial 28 est mis en place dans la deuxième gorge en appui contre la face amont des collerettes 37, et forme une butée axiale pour les pions de retenue radiale 30.

Le jonc d'arrêt axial 28 a une épaisseur sensiblement égale à la largeur de la deuxième gorge annulaire 27.

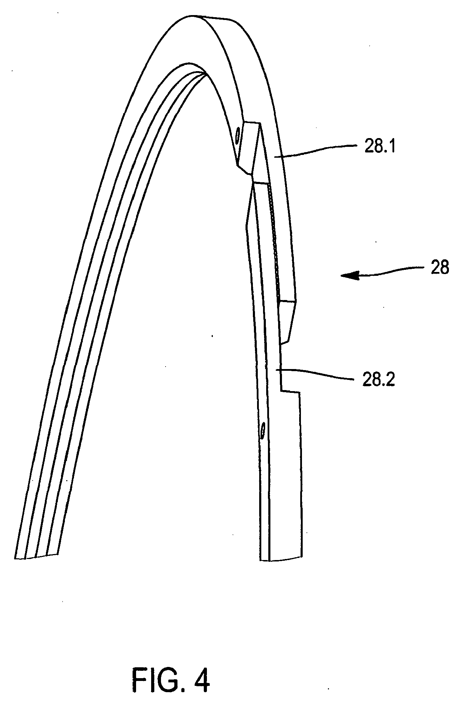

Le jonc d'arrêt axial 28 est du type circlips, il est fendu et ses deux extrémités 28.1, 28.2 sont aptes à être écartées ou rapprochées pour permettre le montage du jonc 28 dans la deuxième gorge 26, et les montages de pions de retenue radiale 30 respectivement. Sur la figure 4, on peut voir le jonc d'arrêt axial au niveau de sa zone fendue, les extrémités 28.1, 28.2 sont en forme de créneaux et se recouvrent au moins partiellement en position de montage, afin de former une butée circulaire continue. Par ailleurs, le recouvrement est suffisant pour éviter une ouverture du jonc d'arrêt axial 28 lors du fonctionnement, ce qui, si l'ouverture se trouvait en face d'un pion de retenue radiale 30, empêcherait le jonc 28 de remplir sa fonction.

En outre, un tel recouvrement des extrémités 28.1, 28.2 permet au jonc d'arrêt axial 28 d'être contenu dans son logement sans risquer que celui-ci s'échappe de la deuxième gorge annulaire 26 par perte de son élasticité.

Les extrémités 28.1, 28.2 sont munies chacune d'un perçage pour l'insertion d'un outil d'écartement du jonc.

Nous allons maintenant expliquer le montage du distributeur haute pression 8 sur le carter sous chambre 18.

Les extrémités 28.1, 28.2 du jonc d'arrêt axial 28 sont écartées, de sorte à permettre sa mise en place dans la deuxième gorge 26.

Les secteurs angulaires 8.1 sont ensuite mis en place sur le carter sous chambre 18, plus particulièrement leur patte 22 est insérée dans la première gorge 24, un jeu fonctionnel est prévu entre les faces aval et amont de chaque patte 22 et la face amont de la première nervure 25 et la face aval de la deuxième nervure 27 respectivement, de sorte à accommoder les variations de dimensions dues à la dilatation du carter sous chambre 28 et du distributeur, tout en réduisant les déplacements des secteurs angulaires.

Les pattes de fixation 22 sont insérées dans la première gorge 24 de sorte à aligner les alésages 32, 34 des pattes de fixations 22 avec les alésages 36 de la deuxième nervure 27.

Les pions de retenue radiale 30 sont ensuite insérés le long d'une direction parallèle à l'axe longitudinal X, pour les uns dans les alésages 32, 36 alignés, et pour les autres dans les alésages 34, 36 alignés, jusqu'à ce que leur collerette 37 vienne en appui contre la face amont de la deuxième nervure 27. Pour cela, le jonc d'arrêt axial 28 est resserré et enfoncé dans le fond de la deuxième gorge. Quand tous les pions de retenue radiale 30 sont en place, le jonc d'arrêt axial 28 est relâché. Du fait de son élasticité le jonc 28 vient en butée par son bord radialement extérieur contre les têtes 30.2 des pions et forme une butée radiale pour les collerettes 37. L'appui radial du jonc 28 sur les têtes 30.2 assure une immobilisation transversale du jonc d'arrêt axial 28.

Les risques qu'un pion de retenue radiale 30 sorte de ses alésages 32, 36 ou 34, 36 sont très faibles, puisqu'il faudrait, d'une part que le jonc perde son élasticité et tombe au fond de la gorge, et que le pion 30 se déplace axialement.

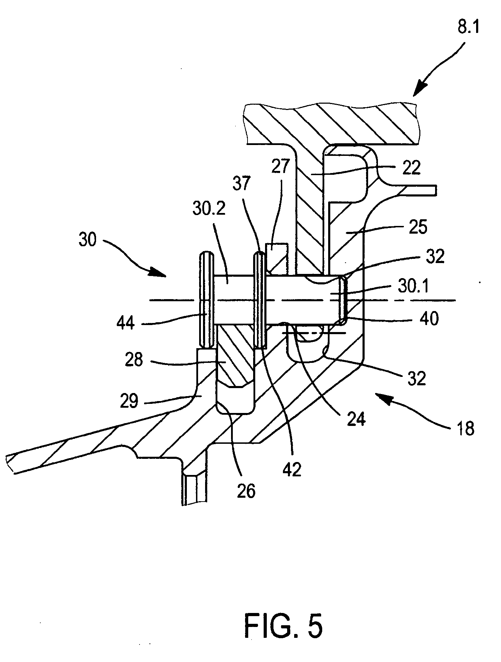

Sur la figure 5, on peut voir un deuxième exemple de réalisation d'un montage du distributeur sur le carter sous chambre selon la présente invention.

Dans ce deuxième exemple, les pions de retenue radiale 30 comportent une deuxième collerette 44 située à l'extrémité libre des têtes 30.2 des pions de retenue radiale 30. La deuxième collerette 44 délimite avec la première collerette 37 une gorge recevant le jonc d'arrêt axial 28.

Ainsi, le jonc d'arrêt axial 28 est reçu par son bord radialement intérieur dans la deuxième gorge 26 et par son bord radialement extérieur entre les collerettes 37, 44. Les collerettes 37, 44 sont, dans l'exemple représenté, de même diamètre. On pourrait cependant prévoir des collerettes de diamètres différents.

Ainsi, même en cas de très fortes vibrations, le jonc d'arrêt axial 28 ne peut s'échapper.

Le montage de ce deuxième exemple de réalisation est similaire à celui du premier exemple de réalisation. Dans ce cas, par contre, la position angulaire du jonc d'arrêt axial 28 est telle que les deux perçages des extrémités 28.1 du jonc d'arrêt axial 28 se situent entre deux pions de retenue radiale 30 pour les rendre accessibles à l'outil de serrage.

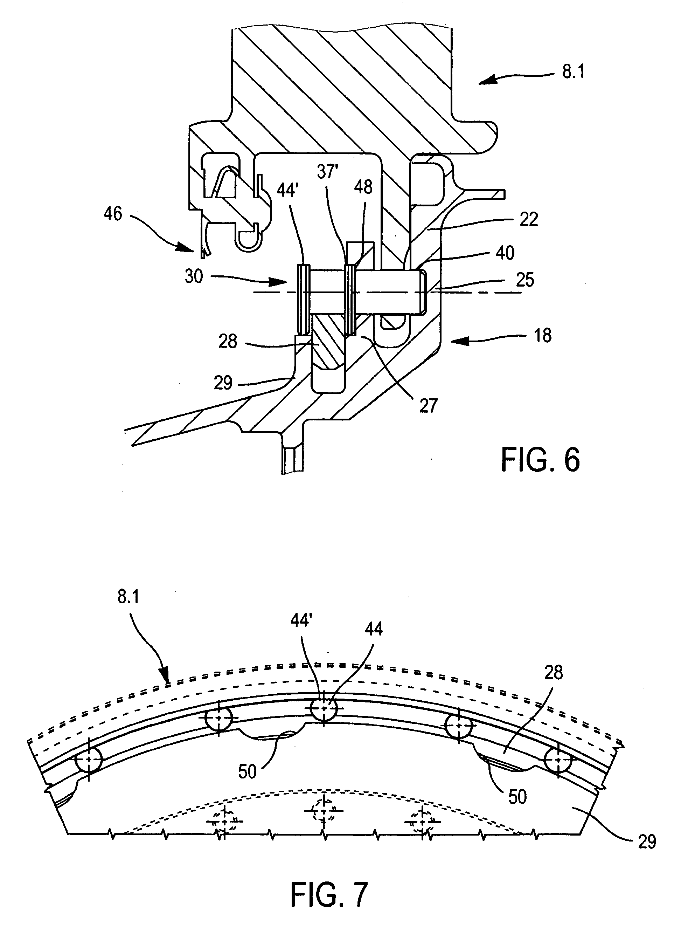

Sur la figure 6, on peut voir une variante de réalisation du deuxième exemple de réalisation, dans lequel le distributeur comporte des lamelles d'étanchéité 46 en appui sur le carter de la chambre de combustion 2. Lorsque les secteurs angulaires 8.1 du distributeur sont en place, les lamelles d'étanchéité 46 sont disposées axialement en amont des alésages 36 de la deuxième nervure 27 et gênent la mise en place des pions 30. En effet, leurs extrémités radialement intérieures interfèrent avec la périphérie des pions de retenue radiale 30 destinée à être disposés radialement vers l'extérieur, lors de l'insertion des pions.

Pour cela, il est prévu de réaliser des méplats 37' et 44' sur les première 37 et deuxième 44 collerettes des pions de retenue radiale 30, ces méplats 37', 44' étant orientés radialement vers l'extérieur et permettant l'insertion des pions sans entrer en contact avec les lamelles 46.

Il est par ailleurs prévu d'immobiliser les pions en rotation pour éviter que les méplats 37', 44' ne se retrouvent orientés radialement vers l'intérieur, les collerettes 37 et 44 ne définissant alors plus une gorge pour recevoir le bord radialement extérieur du jonc 28.

L'immobilisation angulaire des pions 30 est obtenue en réalisant un méplat 48 dans un logement bordant l'extrémité amont des alésages 36 radialement vers l'extérieur, ce méplat 48 ayant une forme correspondant à celle du méplat 37' de la collerette 37. La coopération des deux méplats 37', 48 empêche alors la rotation des pions 30.

Sur la figure 7, on peut voir une vue de la face amont du distributeur haute pression 8 et du carter sous chambre 18 avec les pions de retenue radiale 30 munis de méplats 44'.

Dans cet exemple de réalisation, la troisième nervure 29 comporte des évidements 50 situés angulairement entre deux alésages 36, ces évidements permettant de réduire la masse du carter sous chambre et donc de la turbomachine.

## Revendications

1. Aubage fixe de turbomachine d'axe longitudinal (X) comportant un carter sous chambre (18),et au moins deux secteurs angulaires (8.1) munis de pales (12) formant un distributeur de turbine, lesdits secteurs angulaires (8.1) étant fixés sur le carter (18), chaque secteur angulaire (8.1) comportant une plateforme (20) de laquelle au moins une pale (12) est en saillie radialement vers l'extérieur et une patte de fixation (22) du secteur angulaire (8.1) sur le carter (18), ladite patte de fixation (22) étant en saillie de la plateforme (20) radialement vers l'intérieur, le carter (18) comportant une première gorge annulaire (24) d'axe longitudinal (X) recevant les pattes de fixation (22), l'aubage fixe comportant des pions de retenue radiale (30) des secteurs angulaires (8.1) introduits dans des alésages (36, 32, 34) réalisés dans le carter (18) et les pattes de fixation (22), lesdits alésages (36, 32, 34) ayant des axes sensiblement parallèles à l'axe longitudinal (X), le carter (18) comportant également une deuxième gorge annulaire (26) d'axe longitudinal (X) recevant un jonc d'arrêt axial (28) des pions de retenue radiale (30), **caractérisé en ce que** ledit jonc d'arrêt axial (28) est disposé du côté d'une chambre de combustion par rapport à la première gorge (24).

2. Aubage fixe selon la revendication 1, dans lequel chaque pion comporte une première collerette radiale (37) délimitant sur un pion (30) axialement une tête (30.2) et une queue (30.1), la queue (30.1) traversant les alésages du carter (18) et de la patte de fixation (22), ladite première collerette (37) étant en appui par une face contre une nervure annulaire (27) séparant la première (24) et la deuxième (26) gorge, et par une autre face contre le jonc d'arrêt axial (28), le jonc d'arrêt axial (28) étant en appui par un bord radialement extérieur contre une portion de la périphérie de la tête (30.2) de chaque pion de retenue radiale (30), orientée radialement vers l'intérieur.

3. Aubage fixe selon la revendication 2, dans lequel les pions de retenue radiale (30) comportent une deuxième collerette radiale (44) à une extrémité libre de la tête (30.2), ladite deuxième collerette (44) définissant avec la première collerette (37) un espace de largeur sensiblement égale à celle de la deuxième gorge annulaire (26), et recevant une portion du bord radialement extérieur du jonc d'arrêt axial (28).

4. Aubage fixe selon la revendication 3, dans lequel les première (37) et deuxième collerettes (44) des pions de retenue radiale (30) comportent chacun un méplat (37', 44'), et des moyens d'immobilisation angulaire (48) des pions de retenue radiale (30).

5. Aubage fixe selon la revendication précédente, dans lequel les moyens d'immobilisation angulaire sont formés par un logement muni d'un méplat (48) de forme correspondante à celle de la première collerette (37) bordant l'alésage (36) de la nervure annulaire (27) de séparation de sorte que les méplats (37') des collerettes (37) soient orientés radialement vers l'extérieur.

6. Aubage fixe selon l'une des revendications 1 à 5, dans lequel le jonc d'arrêt axial (28) est fendu, et comporte deux extrémités (28.1, 28.2) se recouvrant de sorte à ce que le jonc d'arrêt axial (28) forme une boucle fermée.

7. Aubage fixe selon la revendication précédente, dans lequel les extrémités (28.1, 28.2) du jonc d'arrêt axial (28) sont de plus faible épaisseur et sont reliées par une partie de plus grande épaisseur, les extrémités (28.1, 28.2) se chevauchant, chacune des extrémités (28.1, 28.2) étant munie d'au moins un perçage pour l'insertion d'un outil pour rapprocher ou écarter les extrémités.

8. Aubage fixe selon l'une des revendications 1 à 7 en combinaison avec la revendication 2, dans lequel la face de la première gorge (24) opposée à la nervure de séparation (27) comporte des alésages (40) non débouchants recevant chacun l'extrémité libre de la queue (30.1) d'un pion de retenue radiale (30).

9. Aubage fixe selon l'une des revendications 1 à 7 en combinaison avec la revendication 2, dans lequel la face de la première gorge (24) opposée à la nervure de séparation (27) comporte des alésages débouchants (38) recevant chacun l'extrémité libre de la queue (30.1) d'un pion de retenue radiale (30).

10. Aubage fixe selon l'une des revendications 1 à 7 en combinaison avec la revendication 2, dans lequel les extrémités libres des queues (30.1) des pions de retenue radiale (30) sont en appui contre la face de la première gorge (24) opposée à la nervure de séparation (27).

11. Aubage fixe selon l'une des revendications précédentes, dans lequel les pattes de fixation (22) des secteurs angulaires (8.1) comportent chacune deux alésages (32, 34) disposés sur un arc de cercle centré sur l'axe longitudinal (X), l'un (32) ayant une section circulaire et l'autre (34) une section oblongue dont la plus grande dimension est sensiblement alignée avec l'arc de cercle.

12. Aubage fixe selon l'une des revendications 1 à 11, dans lequel le disributeur est un ditributeur haute pression.

13. Turbomachine comportant au moins un aubage fixe selon l'une des revendications précédentes.

## Patentansprüche

1. Leitschaufeln einer Turbomaschine mit einer Längsachse (X), umfassend ein Unter-Kammer-Gehäuse (18) und wenigstens zwei Winkelsektoren (8.1), die mit ein Turbinen-Leitrad bildenden Schaufeln (12) versehen sind, wobei die Winkelsektoren (8.1) an dem Gehäuse (18) befestigt sind, wobei jeder Winkelsektor (8.1) eine Plattform (20), von der wenigstens eine Schaufel (12) radial nach außen vorspringt, sowie eine Befestigungslasche (22) des Winkelsektors (8.1) an dem Gehäuse (18) umfasst, wobei die Befestigungslasche (22) von der Plattform (20) radial nach innen vorspringt, wobei das Gehäuse (18) eine, die Befestigungslaschen (22) aufnehmende erste Ringnut (24) mit Längsachse (X) umfasst, wobei die Leitschaufeln Stifte (30) zum radialen Halten der Winkelsektoren (8.1) umfasst, die in in dem Gehäuse (18) und den Befestigungslaschen (22) ausgebildete Bohrungen (36, 32, 34) eingeführt sind, wobei die Achsen der Bohrungen (36, 32, 34) zu der Längsachse (X) im Wesentlichen parallel verlaufen, wobei das Gehäuse (18) auch eine zweite Ringnut (26) mit Längsachse (X) umfasst, die einen axialen Sicherungsring (28) der Stifte (30) zum radialen Halten aufnimmt, **dadurch gekennzeichnet, dass** der axiale Sicherungsring (28) in Bezug auf die erste Nut (24) auf der Seite einer Brennkammer angeordnet ist.

2. Leitschaufeln nach Anspruch 1, wobei jeder Stift einen ersten radialen Kragen (37) umfasst, der an einem Stift (30) einen Kopf (30.2) und einen Schaft (30.1) axial begrenzt, wobei der Schaft (30.1) die Bohrungen des Gehäuses (18) und der Befestigungslasche (22) durchgreift, wobei der erste Kragen (37) mit einer Seite an einer ringförmigen Rippe (27), welche die erste (24) und die zweite (26) Nut trennt, und mit einer anderen Seite an dem axialen Sicherungsring (28) in Anlage ist, wobei der axiale Sicherungsring (28) mit einem radial äußeren Rand an einem radial nach innen gerichteten Abschnitt des Umfangs des Kopfes (30.2) eines jeden Stifts (30) zum radialen Halten in Anlage ist.

3. Leitschaufeln nach Anspruch 2, wobei die Stifte (30) zum radialen Halten einen zweiten radialen Kragen (44) an einem freien Ende des Kopfes (30.2) umfassen, wobei der zweite Kragen (44) mit dem ersten Kragen (37) einen Raum definiert, dessen Breite im Wesentlichen gleich derjenigen der zweiten Ringnut (26) ist und einen Abschnitt des radial äußeren Randes des axialen Sicherungsrings (28) aufnimmt.

4. Leitschaufeln nach Anspruch 3, wobei der erste Kragen (37) und der zweite Kragen (44) der Stifte (30) zum radialen Halten jeweils eine Abflachung (37', 44') sowie Mittel zum winkelmäßigen Festlegen (48) der Stifte (30) zum radialen Halten umfassen.

5. Leitschaufeln nach dem vorhergehenden Anspruch, wobei die Mittel zum winkelmäßigen Festlegen durch eine Aufnahme gebildet sind, die mit einer Abflachung (48) versehen ist, deren Form derjenigen des die Bohrung (36) der ringförmigen Trennrippe (27) säumenden ersten Kragens (37) entspricht, so dass die Abflachungen (37') der Krägen (37) radial nach außen gerichtet sind.

6. Leitschaufeln nach einem der Ansprüche 1 bis 5, wobei der axiale Sicherungsring (28) geschlitzt ist und zwei Enden (28.1, 28.2) aufweist, die sich überlappen, so dass der axiale Sicherungsring (28) eine geschlossene Schleife bildet.

7. Leitschaufeln nach dem vorhergehenden Anspruch, wobei die Enden (28.1, 28.2) des axialen Sicherungsrings (28) eine geringere Dicke aufweisen und durch einen Teil größerer Dicke verbunden sind, wobei die Enden (28.1, 28.2) sich überlappen, wobei ein jedes der Enden (28.1, 28.2) mit wenigstens einer Bohrung für das Einführen eines Werkzeugs zum Annähern oder Entfernen der Enden versehen ist.

8. Leitschaufeln nach einem der Ansprüche 1 bis 7 in Kombination mit Anspruch 2, wobei die von der Trennrippe (27) abgewandte Seite der ersten Nut (24) nicht durchgehende Bohrungen (40) umfasst, die jeweils das freie Ende des Schaftes (30.1) eines Stifts (30) zum radialen Halten aufnehmen.

9. Leitschaufeln nach einem der Ansprüche 1 bis 7 in Kombination mit Anspruch 2, wobei die von der Trennrippe (27) abgewandte Seite der ersten Nut (24) durchgehende Bohrungen (38) umfasst, die jeweils das freie Ende des Schaftes (30.1) eines Stifts (30) zum radialen Halten aufnehmen.

10. Leitschaufeln nach einem der Ansprüche 1 bis 7 in Kombination mit Anspruch 2, wobei die freien Enden der Schäfte (30.1) der Stifte (30) zum radialen Halten an der von der Trennrippe (27) abgewandten Seite der ersten Nut (24) in Anlage sind.

11. Leitschaufeln nach einem der vorhergehenden Ansprüche, wobei die Befestigungslaschen (22) der Winkelsektoren (8.1) jeweils zwei auf einem um die Längsachse (X) zentrierten Kreisbogen angeordnete Bohrungen (32, 34) umfassen, wobei die eine (32) einen kreisförmigen Querschnitt und die andere (34) einen länglichen Querschnitt aufweist, dessen größte Abmessung mit dem Kreisbogen im Wesentlichen fluchtet.

12. Leitschaufeln nach einem der Ansprüche 1 bis 11, wobei das Leitrad ein Hochdruckleirad ist.

13. Turbomaschine, die wenigstens Leitschaufeln nach einem der vorhergehenden Ansprüche umfasst

## Claims

1. A stationary vane assembly of a turbine engine with longitudinal axis (X) comprising a inner casing (18), and at least two angular sectors (8.1) provided with blades (12) forming a turbine guide vane assembly, said angular sectors (8.1) being fixed on the casing (18), each angular sector (8.1) comprising a platform (20) whereof at least one blade (12) protrudes radially outwardly and a fastening tab (22) for fastening the angular sector (8.1) on the casing (18), said fastening tab (22) protruding from the platform (20) radially inwardly, the casing (18), comprising a first annular groove (24) with longitudinal axis (X) receiving the fastening tabs (22), the stationary vane assembly comprising radial retaining pins (30) for the angular sectors (8.1) introduced into bores (36, 32, 34) made in the casing (18) and the fastening tabs (22), said bores (36, 32, 34) having axes substantially parallel to the longitudinal axis (X), the casing (18) also comprising a second angular groove (26) with longitudinal axis (X) receiving an axial retaining ring (28) of the radial retaining pins (28), **characterized in that** said axial retaining ring (28) is positioned on the combustion chamber side relative to the first groove (24).

2. The stationary vane assembly according to claim 1, wherein each pin comprises a first radial skirt (37) axially delimiting, on a pin (30), a head (30.2) and a tail (30.1), the tail (30.1) passing through the bores of the casing (18) and the fastening tab (22), said first skirt (37) bearing by one face against an annular rib (27) separating the first (24) and second (26) grooves, and by another face against the axial retaining ring (28), the axial retaining ring (28) bearing by a radially outer edge against a portion of the periphery of the head (30.2) of each radial retaining pin (30), oriented radially inwards.

3. The stationary vane assembly according to claim 2, wherein the radial retaining pins (30) comprise a second radial skirt (44) at one free end of the head (30.2), said second skirt (44) defining, with the first skirt (37), a space with a width substantially equal to that of the second annular groove (26), and receiving a portion of the radially outer edge of the ring (28).

4. The stationary vane assembly according to claim 3, wherein the first (37) and second (44) skirts of the radial retaining pins (30) each comprise a flat portion (37', 44'), and means (48) for angular immobilization of the radial retaining pins (30).

5. The stationary vane assembly according to the preceding claim, wherein the angular immobilization means are formed by a housing provided with a flat section (48) with a shape corresponding to that of the first skirt (37) bordering the bore (36) of the annular separating rib (27) such that the flat sections (37') of the skirts (37) are oriented radially outwards.

6. The stationary vane assembly according to one of claims 1 to 5, wherein the axial retaining ring (38) is slotted, and comprises two ends (28.1, 28.2) overlapping so that the axial stop edge (28) forms a closed loop.

7. The stationary vane assembly according to the preceding claim, wherein the ends (28.1, 28.2) of the axial retaining ring (28) are thinner and are connected by a portion with a larger thickness, the ends (28.1, 28.2) overlapping, each of the ends (28.1, 28.2) being provided with at least one piercing for the insertion of a tool to bring the ends closer together or further apart.

8. The stationary vane assembly according to one of claims 1 to 7 combined with claim 2, wherein the face of the first groove (24) opposite the separating rib (27) comprises non-through bores (40) each receiving the free end of the tail (30.1) of a radial retaining pin (30).

9. The stationary vane assembly according to one of claims 1 to 7 combined with claim 2, wherein the face of the first groove (24) opposite the separating rib (27) comprises through bores (38) each receiving the free end of the tail (30.1) of a radial retaining pin (30).

10. The stationary vane assembly according to one of claims 1 to 7 combined with claim 2, wherein the free ends of the tails (30.1) of the radial retaining pins (30) bear against the face of the first groove (24) opposite the separating rib (27).

11. The stationary vane assembly according to one of the preceding claims, wherein the fastening tabs (22) of the angular sectors (8.1) each comprise two bores (32, 34) positioned on an arc of circle centered on the longitudinal axis (X), one (32) having a circular section and the other (34) having an oblong section whereof the larger dimension is substantially aligned with the arc of circle.

12. The stationary vane assembly according to one of claims 1 to 11, wherein the vane assembly is a high-pressure vane assembly.

13. A turbine engine comprising at least one stationary vane assembly according to one of the preceding claims.
